# EUROPÄISCHE PATENTANMELDUNG

(11) **EP 1 847 382 A2**
(43) Veröffentlichungstag der Anmeldung: **24.10.2007**
(21) Anmeldenummer: 07006559.4
(22) Anmeldetag: 29.03.2007
(51) Int. Cl.: B32B 5/00

(54) **Isoliervorrichtung und deren Verwendung**

(30) Priorität: 29.03.2006 DE 20605142 U
(71) Anmelder: BDD Beteiligungs GmbH, 68169 Mannheim (DE)
(72) Erfinder: Becker, Michael, 67480 Edenkoben (DE)
(74) Vertreter: Schmitt, Meinrad

(57) **Zusammenfassung**

Eine lsoliervorrichtung enthält einen Innenmantel (2) und einen Außenmantel (4), zwischen welchen Isoliermaterial (6) angeordnet ist. Eine derartige lsoliervorrichtung soll in einfacher und gleichwohl funktionssicherer Weise dahingehend weitergebildet werden, dass eine sichere und dauerbeständige Festlegung des Isoliermaterials (6) bezüglich Innenmantel (2) und Außenmantel (4) erreicht wird. Hierzu wird vorgeschlagen, dass eine Halteeinrichtung (10) vorgesehen ist, welche mittels der Befestigungsvorrichtung (6) am Maschinenelement (4) und / oder dem Aggregat (2) festgelegt ist und dass die Verkleidung (8) mit der Halteeinrichtung (10) zumindest näherungsweise dicht verbunden ist.

## Beschreibung

Die Erfindung bezieht sich auf eine Isoliervorrichtung gemäß den im Oberbegriff des Patentanspruchs 1 angegebenen Merkmalen sowie die Verwendung der Isoliervorrichtung.

Aus der DE 198 21 532 A1 ist eine derartige Isoliervorrichtung bekannt, welche als wärme- und schalldämmende Verkleidung für den Motorraum von Kraftfahrzeugen ausgebildet ist. Diese Isoliervorrichtung enthält einen Innenmantel, welcher nach dem Einbau an der Außenfläche eines Motors oder einer sonstigen Komponente wie einem Abgasrohr desselben anliegt. Ferner enthält die Isoliervorrichtung einen zum Innenmantel unter Bildung eines Zwischenraumes beabstandet angeordneten Außenmantel sowie in den genannten Zwischenraum Isoliermaterial. Das Isoliermaterial befindet sich in Kontakt mit der Innenwand und enthält eine duroplastische Schaumstoffschicht sowie eine weitere isolierende Schicht aus Kunststoffschaum, Partikelverbundschaum oder Faservlies aus nativen oder synthetischen Fasern sowie deren Gemische, genadelt oder ungenadelt. Die Herstellung erfordert einen nicht unerheblichen Aufwand und es sind besondere Maßnahmen erforderlich, damit das Isoliermaterial seine Positionierung zwischen dem Innenmantel und Außenmantel beibehalten kann, zumal in Folge von Vibrationen und Erschütterungen während des Betriebs das Isoliermaterial recht erheblichen Belastungen ausgesetzt ist, aufgrund welcher der Verbund des Isoliermaterials selbst bzw. dessen Schichten ebenso wie die Verbindung mit dem Innenmantel und dem Außenmantel gefährdet sind. Es besteht die Gefahr, dass das Isoliermaterial bereits nach geraumer Zeit die gleichmäßige flächige Anordnung zwischen dem Innenmantel und dem Außenmantel verliert und einerseits Lücken und andererseits Anhäufungen sich örtlich verteilt ausbilden, mit der Folge einer insgesamt verminderten Isolierwirkung. Ferner ist zu beachten, dass die Verbindung der duroplastischen Schaumstoffschicht und der weiteren mit dieser in Kontakt befindlichen Isolierschicht bei Ausbildung des Innenmantels und des Außenmantels aus Metall den Belastungen nicht ohne Weiteres standhalten kann.

Hiervon ausgehend liegt der Erfindung die Aufgabe zugrunde, die aufgezeigten Nachteile zu vermeiden und in einfacher und gleichwohl funktionssicherer Weise die Isoliervorrichtung dahingehend weiterzubilden, dass eine sichere und dauerbeständige Festlegung des Isoliermaterials bezüglich Innenmantel und Außenmantel erreicht wird. Die Isoliervorrichtung soll in einfacher Weise herstellbar sein und problemlos zu handhabende und/oder miteinander zu verbindende Bestandsteile enthalten. Des Weiteren soll die Isoliervorrichtung für hohe Temperaturen verwendbar sein, und zwar insbesondere für Temperaturen größer 200°C, zweckmäßig größer als 500°C. Außerdem soll die Isoliervorrichtung in einfacher Weise mit dem zu isolierenden Bauteil verbindbar sein.

Die Lösung dieser Aufgabe erfolgt gemäß den Merkmalen des Patentanspruchs 1 und ferner des auf die Verwendung gerichteten Patentanspruchs.

Die vorgeschlagene Isoliervorrichtung zeichnet sich durch einen einfachen konstruktiven Aufbau aus und besteht insgesamt aus Metall, und zwar Innenmantel und Außenmantel und vor allem auch das zwischen diesen angeordnete Isoliermaterial. Der Innen- und der Außenmantel bestehen bevorzugt aus Blech oder Folie, insbesondere einer Edelstahlfolie, deren freie Oberflächen in zweckmäßiger Weise mikrostrukturiert und/oder makrostrukturiert aber auch glatt ausgeführt sein können. Für Verwendungen in Bereichen thermischer Isolation in Verbindung mit der Anforderung an Schallabsorption kann die der Schallquelle zugewandte Seite, insbesondere der Innenmantel auch perforiert ausgebildet sein. Die Isolierung, nachfolgend auch als Füllung bezeichnet, besteht und/oder enthält vorzugsweise Fasern oder Drähte, insbesondere Edestahlwolle. Des Weiteren kann die Isolierung, nachfolgend auch Isoliermaterial genannt, erfindungsgemäß aus Folien oder Blechen bestehen oder solche enthalten, welche vor allem durch Profilierung, wie Wellen oder Prägungen, zumindest bereichsweise vorgegebene definierte Abstände zueinander aufweisen. Die Isoliervorrichtung ist rein metallisch ausgebildet und somit problemlos recycelbar. Es ist von besonderer Bedeutung, dass an gewünschten Positionen, und zwar bevorzugt an zumindest einem Rand, Schweißverbindungen zwischen dem Außenmantel und dem Innenmantel einschließlich dem dazwischenliegenden Isoliermaterial vorhanden sind, welche insbesondere durch Punktschweißen und/oder Lichtbogenschweißen hergestellt sind. Je nach Größe der Isoliervorrichtung und/oder den Anforderungen deren Verwendung können an vorgebbaren Positionen der Gesamtfläche weitere Schweißverbindungen vorhanden sein. Aufgrund des kompletten Sandwichaufbaus aus schweißbarem Material ist die Isoliervorrichtung in besonders vorteilhafter Weise an jeder beliebigen und/oder gewünschten Position mit dem zu isolierenden Bauteil bzw. heißen Objekt, wie z.B. Edelstahlrohr, Gußkrümmer oder dergleichen durch Schweißen unmittelbar verbindbar. In bevorzugter Weise ist der Außenmantel wellenförmig ausgebildet, während der Innenmantel im wesentlichen eben oder gekrümmt ausgebildet ist, beispielsweise entsprechend der Außenfläche eines zu isolierenden Rohres oder einer konkaven Fläche und/oder Formgebung eines zu isolierenden Bauteils. Vor der Herstellung der genannten Schweißverbindungen zwischen dem Innenmantel und dem Außenmantel weist letzterer eine größere Längserstreckung auf als der Innenmantel, und zwar unter Berücksichtigung der bei ringförmiger Ausbildung radial nach außen gerichteten Erhebungen und den zwischen diesen vorhandenen Tälern des Außenmantels. Des Weiteren ist von besonderer Bedeutung, dass aufgrund der Verbundstruktur, insbesondere der genannten Schweißverbindungen, die Gefahr von Eigenschwingungen bzw. Resonanzanregungen auf ein Minimum reduziert ist, wobei vor allem durch Vorgabe der Abstände der punktförmig ausgebildeten Schweißverbindungen unter Berücksichtigung des Frequenzspektrums des Motors und/oder einer sonstigen Schallquelle eine definierte Positionierung und/oder Ausbildung der Schweißstellen der Isoliervorrichtung vorgegeben werden kann.

Besondere Ausgestaltungen und Weiterbildungen der Erfindung sind in den Unteransprüchen sowie der nachfolgenden Beschreibung besonderer Ausführungsbeispiele angegeben.

Die Erfindung wird nachfolgend anhand der in der Zeichnung dargestellten Ausführungsbeispiele näher erläutert, ohne dass insoweit eine Beschränkung erfolgt. Es zeigen:
- Fig. 1: in schematischer Darstellung eine Seitenansicht der Isoliervorrichtung,
- Fig. 2: ein Ausführungsbeispiel mit gewelltem Außenmantel.

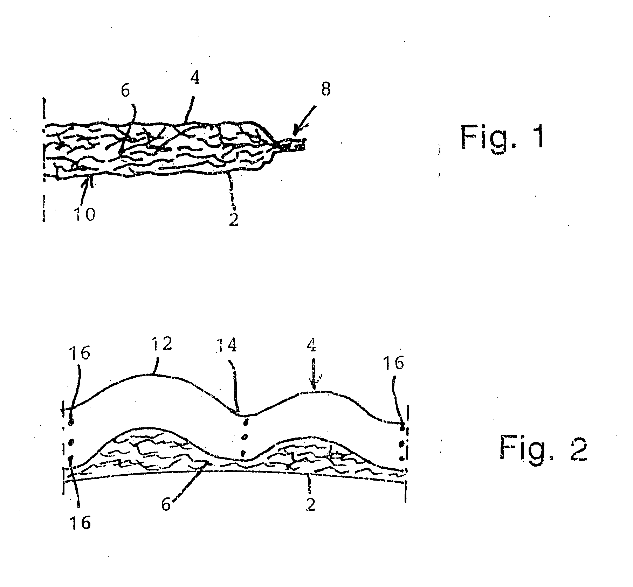

Die Isoliervorrichtung enthält gemäß Fig. 1 einen Innenmantel 2 und einen Außenmantel 4 aus Stahlblechen bzw. Stahlfolien, insbesondere Edelstahlfolien, deren Dicke vorzugsweise im Bereich von 0,015 bis 0,45 mm, insbesondere zwischen 0,025 bis 0,03 mm vorgegeben ist. Der Innenmantel 2 und/oder der Außenmantel 4 und/oder deren Oberflächen sind vorteilhaft mikro- oder makrostrukturiert ausgebildet, doch können im Rahmen der Erfindung der Außenmantel 2 und der Außenmantel 4 auch glatt ausgeführt sein. Zwischen dem Innenmantel 2 und dem Außenmantel 4 ist Isoliermaterial 6 angeordnet, welches bevorzugt aus Stahlwolle, insbesondere Edelstahlwolle, besteht oder solche enthält. Das Isoliermaterial 6 besteht oder enthält im Rahmen der Erfindung schweißbares Material. Nach dem Zuschneiden der Isoliervorrichtung auf die erforderlichen Abmessungen kann somit wenigstens ein Rand durch Schweißen miteinander verbunden werden, ohne dass in der Schweißzone bzw. am Rand 8 zuvor das Isoliermaterial entfernt werden muss. Des Weiteren können an beliebigen Positionen Schweißungen durchgeführt werden, insbesondere zur Verbindung mit einem zu isolierenden Bauteil oder mit weiteren Isoliervorrichtungen oder Isolierelementen. Nach Herstellung der Schweißverbindung ist am Rand bzw. in der Schweißzone 8 oder der gewünschten Position zwischen dem Innenmantel 2 und dem Außenmantel 4 das Isoliermaterial 6, wie dargestellt, zusammen gepresst vorhanden. Für Anwendungen in Bereichen thermischer Isolation in Verbindung mit der Anforderung an Schallabsorption ist die einer Schallquelle zugewandte Seite 10, beispielsweise des Innenmantels 2, in vorteilhafter Weise perforiert ausgeführt.

Das Isoliermaterial 6, welches auch als Füllung bezeichnet wird, besteht vorzugsweise aus Stahlwolle. Das Isoliermaterial 6 ist mit den Innenflächen des Innenmantels 2 und den Außenmantel 4 in geeigneter Weise, insbesondere mittels eines Klebemittels, vorteilhaft verbunden. Das Isoliermaterial 6 besitzt vor dem Einbringen zwischen den Innenmantel 2 und den Außenmantel 4 vorteilhaft eine Dicke im Bereich zwischen 6 bis 16 mm, insbesondere im Bereich von 10 bis 12 mm. Das Flächengewicht des Isoliermaterials 6 ist vor dem Einbringen zwischen den Innenmantel 2 und den Außenmantel 4, somit das Ausgangsflächengewicht, im Bereich von 1.500 bis 3.000 g/m², insbesondere im Bereich von 2.00 bis 2.400 g/m² vorgegeben. Nachfolgend wird das Isoliermaterial, insbesondere die Edelstahlwolle, je nach Erfordernis und Anwendungsfall gemeinsam mit dem Innenmantel 2 und dem Außenmantel 4, und zwar insbesondere ausgehend von einer Gesamt-Ausgangsstärke von bevorzugt im Wesentlichen 8 bis 15 mm, insbesondere im Wesentlichen 10 bis 12,6 mm, um einen vorgegebenen Faktor komprimiert. Danach weist die erfindungsgemäße Isoliervorrichtung eine Gesamtstärke im Bereich von 4 bis 6 mm, insbesondere von 3 bis 5 mm, auf. Im Rahmen der Erfindung wird die Komprimierung des Isoliermaterials bzw. der gesamten Isoliervorrichtung bei der Herstellung um einen vorgegebenen Faktor derart vorgegeben, dass einerseits die Wärmeleitung über das metallische Isoliermaterial nicht zu groß wird und andererseits die Dicke hinreichend derart reduziert ist, dass die Formbarkeit der fertigen Isoliervorrichtung in einfacher Weise und problemlos gegeben ist.

In einer alternativen Ausgestaltung besteht oder enthält das Isoliermaterial Bleche aus schweißbarem Metall, insbesondere Stahl. Es sei festgehalten, dass der Innenmantel 2 und der Außenmantel gleichfalls aus schweißbarem Metall, insbesondere Stahl bestehen. Zwischen dem oder den Blechen des Isoliermaterials ebenso wie dessen den Innenmantel und/oder Außenmantel zugewandten Bereichen kann, wie oben erläutert, gleichfalls Stahlwolle vorhanden sein.

Die Isoliervorrichtung besitzt somit einen Sandwichaufbau und eine sehr gute thermische Dämmwirkung. Da sowohl der Innenmantel 2 als auch der Außenmantel 4 und ferner auch das Isoliermaterial 6 rein metallisch ausgebildet sind, ist die Isoliervorrichtung problemlos recycelbar. Vor Allem bei perforierter Ausbildung des der Schallquelle zugewandten Innenmantels 2 wird eine hohe Schallabsorption erreicht. Darüber hinaus ist es von besonderer Bedeutung, dass aufgrund der Sandwich- oder Verbundstruktur die Neigung zu Eigenschwingungen bzw. Resonanzerregung erheblich reduziert ist. Die Isoliervorrichtung ist an jeder Position, und zwar an dem oben erläuterten Rand ebenso wie in weiteren Positionen oder Bereichen, schweißbar und/oder gegen Null gehend verpressbar. Die Isoliervorrichtung oder der komplette Sandwichaufbau sind problemlos verformbar und/oder an jeder gewünschten Position mit dem zu isolierenden Körper oder heißen Objekt, wie Edelstahlrohr, Abgasrohr oder Gusskrümmer oder dergleichen, in den verschiedensten Verfahren in einfacher Weise verschweißbar.

Fig. 2 zeigt eine besondere Ausgestaltung der erfindungsgemäßen Isoliervorrichtung, deren Innenmantel 2 eine im wesentlichen gleichförmig gekrümmte Kontur aufweist und deren Außenmantel 6 wellenförmig mit Erhebungen 12 und Tälern 14 ausgebildet ist. Vor dem Verschweißen des Innenmantels 2 mit dem Außenmantel 4 zusammen mit der metallischen Isolierung 6 ist die Längserstreckung, und zwar gemessen quer zu den Erhebungen 12 sowie Tälern 14, des Außenmantels 4 erheblich größer als die Längserstreckung des Innenmantels 2, und zwar entsprechend der Höhendifferenz der Erhebungen 12 und der Täler 14. Die Schweißverbindungen, welche erfindungsgemäß vorteilhaft als Punktschweißverbindungen 16 ausgebildet sind, sind bevorzugt in den Tälern 14 angeordnet, wobei ferner zweckmäßig auch die Ränder 8 und/oder die dort vorgesehenen Schweißzonen jeweils in Tälern sich befinden. Aufgrund der im wesentlichen gleichmäßig gekrümmten Ausbildung des Innenmantels 2 liegt dieser in besonders vorteilhafter Weise an einer entsprechend gekrümmten Außenfläche des zu isolierenden Bauteils weitestgehend flächig und/oder gleichmäßig an, wodurch über die isolierte Fläche unerwünschte Lücken zwischen der Isoliervorrichtung und dem zu isolierenden Bauteil vermieden werden.

### Bezugszeichen

- 2: Innenmantel
- 4: Außenmantel
- 6: Isoliermaterial
- 8: Rand / Schweißzone / Schweißpunkt
- 10: Seite der Schallquelle zugewandt
- 12: Erhebung von 4
- 14: Tal von 4
- 16: Schweißzone / Schweißpunkt

## Patentansprüche

1. Isoliervorrichtung, enthaltend einen Innenmantel (2) und einen Außenmantel (4), zwischen welchen Isoliermaterial (6) angeordnet ist,
**dadurch gekennzeichnet,**
**dass** das Isoliermaterial (6) aus einem schweißbaren Werkstoff besteht oder solchen enthält ebenso wie der Innenmantel (2) und der Außenmantel (4)
und **dass** zumindest an einem Rand der Isoliervorrichtung eine Schweißzone (8) oder Schweißpunkte (16) vorgesehen sind, in welchen der Innenmantel (2) und der Außenmantel (4) sowie das zwischen diesen vorhandene Isoliermaterial (6) miteinander verbunden sind.

2. Isoliervorrichtung nach Anspruch 1, **dadurch gekennzeichnet, dass** das Isoliermaterial (6) schweißbarer Werkstoff in Form von Fasern oder Drähten enthält, bevorzugt Stahlwolle und insbesondere Edelstahlwolle, oder aus solchem ausgebildet ist.

3. Isoliervorrichtung nach Anspruch 1, **dadurch gekennzeichnet, dass** das Isoliermaterial (6) aus schweißbaren Blechen oder Folien, bevorzugt Stahl und insbesondere Edelstahl, aufgebaut ist und/oder solches enthält, wobei die Bleche oder Folien bevorzugt durch wellenförmige Konturen oder Prägungen zueinander und/oder zum Innenmantel (2) und/oder zum Außenmantel (4) vorgegebene Abstände zumindest punktuell aufweisen

4. Isoliervorrichtung nach einem der Ansprüche 1 bis 3, **dadurch gekennzeichnet, dass** das Isoliermaterial (6) als eine Kombination aus Fasern und/oder Drähten und/oder Blechen und/oder Folien ausgebildet ist.

5. Isoliervorrichtung nach einem der Ansprüche 1 bis 4, **dadurch gekennzeichnet, dass** der Innenmantel (2) eine zumindest teilweise und/oder näherungsweise gleichförmig gekrümmte Kontur aufweist und dass der Außenmantel (4) eine wellenförmige Kontur mit Erhebungen (12) und Tälern (14) aufweist, wobei in den Tälern (14) Schweißzonen und/oder Schweißpunkte (16) zwecks Verbindung des Außenmantels (4) mit dem Innenmantel (2) sowie dem dazwischen angeordneten Isoliermaterial (6) vorgesehen sind.

6. Verwendung der Isoliervorrichtung nach einem der Ansprüche 1 bis 5, **dadurch gekennzeichnet, dass** die Isoliervorrichtung mit dem zu isolierenden Bauteil direkt mittels einer Schweißverbindung und/oder Schweißzone und/oder Schweißpunkten verbindbar oder verbunden ist.

7. Verwendung nach Anspruch 6, **dadurch gekennzeichnet, dass** der Innenmantel (2) eine an die Außenfläche des zu isolierenden Bauteils angepaßte Kontur, insbesondere Krümmung aufweist, wobei der Außenmantel (4) bevorzugt wellenförmig ausgebildet ist.
